# EUROPEAN PATENT APPLICATION

(11) **EP 4 604 593 A1**
(43) Date of publication of application: **20.08.2025**
(21) Application number: 23893903.7
(22) Date of filing: 22.11.2023
(51) Int. Cl.: H04W 12/06

(54) **LOGIN METHOD AND APPARATUS FOR INTELLIGENT CABIN SYSTEM**

(30) Priority: 27.11.2022 CN 202211495421
(71) Applicant: Huawei Technologies Co., Ltd., Shenzhen, Guangdong 518129 (CN)
(72) Inventor: LIU, Yongjun, Shenzhen, Guangdong 518129 (CN)
(74) Representative: Pfenning, Meinig & Partner mbB
(86) International application number: PCT/CN2023/133302
(87) International publication number: WO 2024/109815

(57) **Abstract**

This application relates to the field of communication technologies, and discloses a method and an apparatus for logging in to an intelligent cockpit system. The method includes: receiving, by an intelligent cockpit, first request information from a terminal device, where the first request information includes a user account corresponding to the vehicle, and the user account belongs to a first-type account; and if it is determined to authorize the terminal device to log in to the first-type account on the intelligent cockpit system, logging in to the user account on the intelligent cockpit system based on the first request information. According to the foregoing method, the first-type account (that is, a temporary account) can be logged in on the intelligent cockpit system through communication between the terminal device and the intelligent cockpit. Because the temporary account does not need to be verified by a cloud server, a login failure problem in an environment with no reception or with poor reception is avoided, and user experience is improved. In addition, in the foregoing method, a user may not need to perform an operation, to facilitate seamless login or user account switching on the intelligent cockpit system.

## Description

### CROSS-REFERENCE TO RELATED APPLICATIONS

This application claims priority to Chinese Patent Application No. 202211495421.7, filed with the China National Intellectual Property Administration on November 27, 2022 and entitled "METHOD AND APPARATUS FOR LOGGING IN TO INTELLIGENT COCKPIT SYSTEM", which is incorporated herein by reference in its entirety.

### TECHNICAL FIELD

This application relates to the field of communication technologies, and in particular, to a method and an apparatus for logging in to an intelligent cockpit system.

### BACKGROUND

With development of modern economy, vehicles have become the most important means of transportation in people's daily life. To improve in-vehicle experience of a driver or a passenger, an intelligent cockpit is introduced into the vehicle. Currently, the intelligent cockpit has become an indispensable part of an intelligent vehicle. An intelligent cockpit system is installed in the intelligent cockpit. A user may log in to the intelligent cockpit system of the intelligent cockpit by using an account of the user, and perform human-machine interaction through a display of the intelligent cockpit, to personalize some settings such as a personalized wallpaper, a rearview mirror position, a seat position, and a driving mode.

When a plurality of family members share a same vehicle, the family members personalize settings based on their own driving habits when using the vehicle. For example, when taking over the vehicle from a family member 1, a family member 2 needs to log in to an account of the family member 2 on the intelligent cockpit system of the intelligent cockpit, to enable personalized settings of the family member 2.

However, when an account is logged in to on the intelligent cockpit system, the intelligent cockpit needs to communicate with a cloud server. Therefore, if the intelligent cockpit is in an environment with no reception or with poor reception, for example, in an environment like an enclosed parking lot, an underground garage, or a suburban area in which signal strength of a mobile communication network is poor, that is, the intelligent cockpit is in an unconnected state, the intelligent cockpit cannot communicate with the cloud server. Consequently, login fails, and user experience is affected.

### SUMMARY

This application provides a method and an apparatus for logging in to an intelligent cockpit system, to log in to a first-type account (that is, a temporary account) on the intelligent cockpit system, avoid a login failure problem in an environment with no reception or with poor reception, and improve user experience.

According to a first aspect, embodiments of this application provide a method for logging in to an intelligent cockpit system. The method may be applied to an intelligent cockpit of a vehicle or a component (for example, a circuit or a chip) in an intelligent cockpit. An example in which the method is applied to the intelligent cockpit is used, and the intelligent cockpit system is installed in the intelligent cockpit. In the method: receiving, by the intelligent cockpit, first request information from a terminal device, where the first request information includes a user account corresponding to the vehicle, and the user account belongs to a first-type account; and if it is determined to authorize the terminal device to log in to the first-type account on the intelligent cockpit system, logging in to the user account on the intelligent cockpit system based on the first request information.

According to the foregoing method, a temporary account can be logged in on the intelligent cockpit system through communication between the terminal device and the intelligent cockpit. Because the temporary account does not need to be verified by a cloud server, a login failure problem in an environment with no reception or with poor reception is avoided, and user experience is improved. In addition, in the foregoing method, a user may not need to perform an operation, so that seamless login or user account switching on the intelligent cockpit system can be implemented.

In a possible design, the first request information further includes historical vehicle setting information corresponding to the user account, and the method further includes: performing, on the vehicle based on the historical vehicle setting information, setting corresponding to the historical vehicle setting information. In this way, the historical vehicle setting information corresponding to the user account is stored in the terminal device, and may be sent by the terminal device to the intelligent cockpit.

In a possible design, the method further includes: sending updated vehicle setting information to the terminal device after an operation of updating a vehicle setting is detected. In this way, the intelligent cockpit may send the updated vehicle setting information to the terminal device, so that the terminal device synchronously updates vehicle setting information corresponding to the user account.

In a possible design, determining to authorize the terminal device to log in to the first-type account on the intelligent cockpit system includes: receiving second request information from the terminal device, where the second request information is used to request to authorize the terminal device to log in to the first-type account on the intelligent cockpit system; and determining, based on the second request information, to authorize the terminal device to log in to the first-type account on the intelligent cockpit system.

In a possible design, the determining, based on the second request information, to authorize the terminal device to log in to the first-type account on the intelligent cockpit system includes: sending prompt information based on the second request information, where the prompt information is used to prompt a user to determine whether to authorize the terminal device to log in to the first-type account on the intelligent cockpit system, and after an authorization operation of the user is detected, determining to authorize the terminal device to log in to the first-type account on the intelligent cockpit system; or the second request information includes facial image information, and if the facial image information is consistent with prestored facial image information, or the facial image information is consistent with detected facial image information of a driver, determining to authorize the terminal device to log in to the first-type account on the intelligent cockpit system.

In a possible design, the method further includes: sending authorization notification information to the terminal device, where the authorization notification information indicates the intelligent cockpit to authorize the terminal device to log in to the first-type account on the intelligent cockpit system.

In this way, the intelligent cockpit may determine, based on the second request information, whether to perform authorization, and send an authorization result to the terminal device. From a perspective of the terminal device, the terminal device first sends the second request information to the intelligent cockpit to request authorization. If it is determined, based on the authorization result, that the authorization succeeds, the terminal device may send the first request information. Otherwise, the terminal device may not send the request information, thereby reducing signaling overheads.

In a possible design, the method further includes: sending a short-distance broadcast message, where the short-distance broadcast message includes identification information of the vehicle.

In this way, the intelligent cockpit may send the identification information of the vehicle to the terminal device through the short-distance broadcast message. Compared with another manner (for example, the terminal device communicates with the intelligent cockpit based on a near field communication technology, and in this case, the terminal device and the intelligent cockpit need to perform "OneHop"), this facilitates seamless login or user account switching on the intelligent cockpit system.

In a possible design, the sending a short-distance broadcast message includes: when it is determined that a preset condition is met, sending the short-distance broadcast message, where determining that a preset condition is met includes: detecting an operation of starting the intelligent cockpit system and that the vehicle is in a parking state, or detecting that the intelligent cockpit system is in a running state and that the vehicle is in a parking state.

In a possible design, before the logging in to the user account on the intelligent cockpit system, the method further includes: determining that the terminal device meets at least one of the following: the terminal device is located in a preset area, and the preset area includes an area in which a driver's seat is located; and a distance between the terminal device and the intelligent cockpit is less than a preset distance.

In a possible design, the method further includes: if no status packet from the terminal device is received within specified duration, exiting the user account when the vehicle is in the parking state.

According to a second aspect, embodiments of this application provide a method for logging in to an intelligent cockpit system. The method may be applied to a terminal device or a component (for example, a circuit or a chip) in a terminal device. An example in which the method is applied to the terminal device is used. In the method: obtaining, by the terminal device, identification information of a vehicle; and sending first request information to an intelligent cockpit of the vehicle, where the first request information includes a user account corresponding to the vehicle, the first request information is used to request to log in to the user account on the intelligent cockpit system of the intelligent cockpit, and the user account belongs to a first-type account.

In a possible design, the first request information further includes historical vehicle setting information corresponding to the user account, and the historical vehicle setting information is used to perform, on the vehicle, setting corresponding to the historical vehicle setting information.

In a possible design, the method further includes: receiving updated vehicle setting information from the intelligent cockpit, where the updated vehicle setting information is sent after an operation of updating a vehicle setting is detected.

In a possible design, the method further includes: sending second request information to the intelligent cockpit, where the second request information is used to request to authorize the terminal device to log in to the first-type account on the intelligent cockpit system.

In a possible design, the second request information includes facial image information, and the facial image information is used to determine whether to authorize the terminal device to log in to the first-type account on the intelligent cockpit system.

In a possible design, the method further includes: receiving authorization notification information from the intelligent cockpit, where the authorization notification information indicates the intelligent cockpit to authorize the terminal device to log in to the first-type account on the intelligent cockpit system.

In a possible design, the obtaining identification information of a vehicle includes: receiving a short-distance broadcast message from the intelligent cockpit, where the short-distance broadcast message includes the identification information of the vehicle.

It may be understood that the method described in the second aspect corresponds to the method described in the first aspect. For beneficial effects of related technical features in the second aspect, refer to the descriptions in the first aspect. Details are not described again.

According to a third aspect, this application provides an apparatus for logging in to an intelligent cockpit system. The apparatus has a function of implementing the first aspect or the second aspect. For example, the apparatus includes a corresponding module, unit, or means (means) for performing operations in the first aspect or the second aspect. The module, unit, or means may be implemented by using software, may be implemented by using hardware, or may be implemented by hardware by executing corresponding software.

In a possible design, the apparatus includes a processing unit and a communication unit. The communication unit may be configured to send and receive a signal, to implement communication between the apparatus and another apparatus. The processing unit may be configured to perform some internal operations of the apparatus. Functions performed by the processing unit and the communication unit may correspond to operations in the first aspect or the second aspect.

In a possible design, the apparatus includes a processor. The processor may be configured to be coupled to a memory. The memory may store a necessary computer program or instructions for implementing functions in the first aspect or the second aspect. The processor may execute the computer program or the instructions stored in the memory. When the computer program is executed or the instructions are executed, the apparatus is enabled to implement the method according to any possible design or implementation of the first aspect or the second aspect.

In a possible design, the apparatus includes a processor and a memory. The memory may store a necessary computer program or instructions for implementing functions in the first aspect or the second aspect. The processor may execute the computer program or the instructions stored in the memory. When the computer program is executed or the instructions are executed, the apparatus is enabled to implement the method according to any possible design or implementation of the first aspect or the second aspect.

In a possible design, the apparatus includes a processor and an interface circuit. The processor is configured to: communicate with another apparatus via the interface circuit, and perform the method according to any possible design or implementation of the first aspect or the second aspect.

It may be understood that in the third aspect, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated on a same chip, or may be disposed on different chips. A type of the memory and a manner in which the memory and the processor are disposed are not limited in embodiments of this application.

According to a fourth aspect, this application provides a communication system. The communication system may include an intelligent cockpit and a terminal device. The intelligent cockpit is used for the method provided in the first aspect, and the terminal device is configured to perform the method provided in the second aspect.

According to a fifth aspect, this application provides a computer-readable storage medium. The computer storage medium stores computer-readable instructions. When a computer reads and executes the computer-readable instructions, the computer is enabled to perform the method according to any possible design of the first aspect or the second aspect.

According to a sixth aspect, this application provides a computer program product. When a computer reads and executes the computer program product, the computer is enabled to perform the method according to any possible design of the first aspect or the second aspect.

According to a seventh aspect, embodiments of this application provide a chip system or an integrated circuit. The chip system or the integrated circuit includes at least one processor and an interface circuit. The interface circuit is configured to provide a program or instructions for the at least one processor, and the at least one processor executes the program or the instructions, to implement the method according to any possible design of the first aspect or the second aspect. Further, the interface circuit further provides data for the at least one processor.

### BRIEF DESCRIPTION OF DRAWINGS

FIG. 1 is a diagram of a possible procedure of logging in to an intelligent cockpit system according to an embodiment of this application;
FIG. 2 is a diagram of a communication system to which an embodiment of this application is applicable;
FIG. 3 is a diagram of possible structures of a terminal device and an intelligent cockpit according to an embodiment of this application;
FIG. 4 is a schematic flowchart corresponding to a method according to Embodiment 1 of this application;
FIG. 5 is a schematic flowchart corresponding to a method according to Embodiment 2 of this application;
FIG. 6 is a schematic flowchart corresponding to a method according to Embodiment 3 of this application;
FIG. 7 is a possible example block diagram of an apparatus according to an embodiment of this application;
FIG. 8 is a diagram of a structure of an intelligent cockpit according to an embodiment of this application; and
FIG. 9 is a diagram of a structure of a terminal device according to an embodiment of this application.

### DESCRIPTION OF EMBODIMENTS

The following describes the technical solutions in embodiments of this application with reference to accompanying drawings in embodiments of this application.

First, terms used in embodiments of this application are explained and described. These explanations are intended to make embodiments of this application easier to understand, and should not be construed as a limitation on the protection scope claimed in this application.

### (1) Terminal device

The terminal device may be a device with a wireless connection function, for example, may be a portable device like a mobile phone, a tablet computer, a wearable device (such as a watch, a band, a helmet, or an earphone) with a wireless communication function, a vehicle-mounted terminal device, an augmented reality (augmented reality, AR)/a virtual reality (virtual reality, VR) device, a notebook computer, an ultra-mobile personal computer (ultra-mobile personal computer, UMPC), a netbook, or a personal digital assistant (personal digital assistant, PDA).

### (2) Intelligent cockpit and intelligent cockpit system

The intelligent cockpit is a cockpit equipped with an intelligent and network-connected onboard product, thereby having an intelligent interaction function. In embodiments of this application, an example in which the intelligent cockpit is an intelligent cockpit of a vehicle is used. The intelligent cockpit can implement interaction between human and a vehicle and between a vehicle and the outside (for example, between vehicles).

An intelligent cockpit system is installed in the intelligent cockpit, and the intelligent cockpit system can be used to manage the intelligent cockpit. The intelligent cockpit system uses an account login mechanism. An account may correspond to vehicle setting information of a user. After the user successfully logs in to the intelligent cockpit system by using the account, the intelligent cockpit system may perform corresponding setting based on the vehicle setting information of the user, to meet a personalized requirement of the user.

For example, the vehicle setting information may include at least one of the following: autonomous driving information, driving behavior habit information, vehicle seat position adjustment information, rearview mirror position adjustment information, and driving mode information. It may be understood that the vehicle setting information may further include other possible information. This is not limited in embodiments of this application.

### (3) Short-distance communication technology

A short-distance communication (which may also be referred to as short-distance wireless communication) technology is a communication technology in which a communication distance is less than or equal to a preset distance threshold. For example, the preset distance threshold may be 10 meters (m), 5 m, 1 m, 30 centimeters (cm), 10 cm, or 5 cm.

There may be a plurality of short-distance communication technologies. For example, the short-distance communication technology is a wireless fidelity (wireless fidelity, Wi-Fi) communication technology, and a preset distance threshold corresponding to the Wi-Fi technology may be, for example, 10 m. For another example, the short-distance communication technology is a Bluetooth communication technology, and a preset distance threshold corresponding to the Bluetooth communication technology may be, for example, 8 m. For still another example, the short-distance communication technology is a near field communication (near field communication, NFC) technology, and a preset distance threshold corresponding to the NFC technology may be, for example, 10 cm.

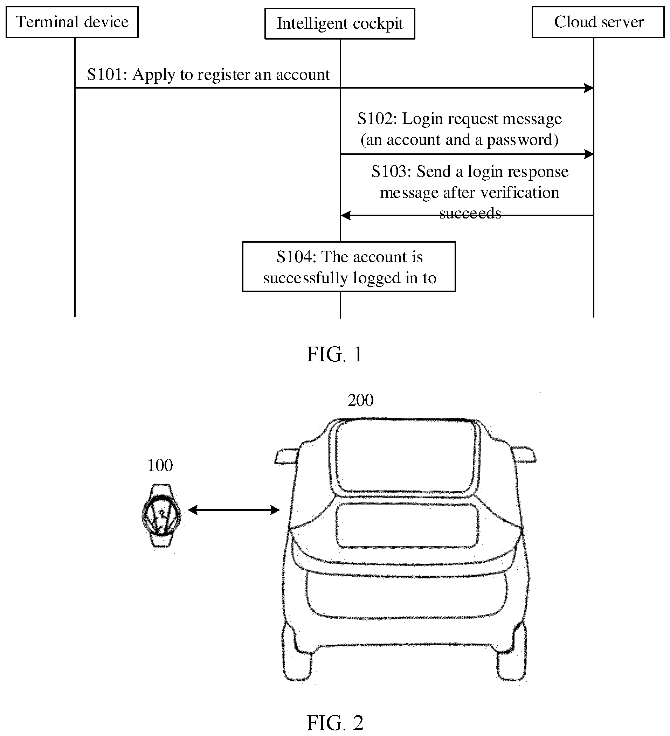

Because an intelligent cockpit system uses an account login mechanism, in a possible login manner, a user needs to first apply to a cloud server for registering an account by using an application (the application is an application related to the intelligent cockpit system, and may be provided by a vehicle manufacturer) installed in a mobile phone. After the registration succeeds, the cloud server may store the account registered by the user and a corresponding password. Subsequently, the user may use the pre-registered account and the corresponding password to log in to the intelligent cockpit system. With reference to FIG. 1, the following describes a possible procedure of logging in to an intelligent cockpit system.

As shown in FIG. 1, the procedure may include the following steps.

S101: A user applies to a cloud server for registering an account by using an application installed in a mobile phone.

S102: After detecting a login operation of the user, the intelligent cockpit system sends a login request message to the cloud server.

For example, the login operation of the user may be that the user enters an account pre-registered by the user and a corresponding password through a display of an intelligent cockpit, or may be another possible operation. The login request message may include an account and a corresponding password.

S103: After receiving the login request message, the cloud server verifies the login request message. If the verification succeeds, the cloud server sends a login response message to the intelligent cockpit system, where the login response message indicates that the account is valid.

For example, when the cloud server determines that the account and the corresponding password in the login request message are consistent with the previously stored account and corresponding password, the verification succeeds. Otherwise, the verification fails.

S104: The intelligent cockpit system receives the login response message, and the account is successfully logged in to the intelligent cockpit system.

It can be learned from the foregoing login procedure that because the user account is an account pre-registered on the cloud server, in a process in which the user performs login by using an account, the intelligent cockpit system needs to communicate with the cloud server to verify validity of the account, that is, the intelligent cockpit system needs to connect to a network.

However, if the intelligent cockpit is in an environment with no reception or with poor reception, for example, in an environment like an enclosed parking lot, an underground garage, or a suburban area in which signal strength of a mobile communication network is poor, that is, the intelligent cockpit is in an unconnected state, the intelligent cockpit cannot communicate with the cloud server. Consequently, login fails, and user experience is affected.

In view of this, embodiments of this application provide a method for logging in to an intelligent cockpit system, to log in to a first-type account (that is, a temporary account) on the intelligent cockpit system. Because the login to the temporary account does not require communication between the intelligent cockpit and the cloud server, a login failure problem in an environment with no reception or with poor reception can be avoided, and user experience can be improved.

It may be understood that embodiments of this application relate to two types of accounts: a first-type account and a second-type account. The first-type account is an account (that is, an account that a user does not need to apply to a cloud server for registration, and therefore, when the first-type account is logged in on an intelligent cockpit system, communication between an intelligent cockpit and the cloud server is not needed) that does not need to be registered by a user. The first-type account may also be referred to as a temporary account or an account used for temporary login. The second-type account is an account (for example, the foregoing account that the user applies to the cloud server for registration, and therefore, when the first-type account is logged in on the intelligent cockpit system, communication between the intelligent cockpit and the cloud server is needed) that needs to be registered by a user. For example, a corresponding password may not be set for the first-type account, and a corresponding password needs to be set for the second-type account.

All aspects, embodiments, or features are presented in the following in this application by describing a communication system that may include a plurality of devices, components, modules, and the like. It should be appreciated and understood that the communication system may include another device, component, module, and the like, and/or may not include all devices, components, modules, and the like discussed with reference to the accompanying drawings. In addition, a combination of these solutions may be used.

The communication system and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding of embodiments of this application, the following first describes in detail a communication system applicable to embodiments of this application by using a communication system shown in **FIG. 2** as an example. As shown in FIG. 2, the communication system includes a first device 100 and a second device 200. Embodiments of this application are mainly described by using an example in which the first device may be a terminal device and the second device may be an intelligent cockpit. In addition, the terminal device and the intelligent cockpit support a short-distance communication technology, that is, the terminal device and the intelligent cockpit may communicate with each other based on the short-distance communication technology.

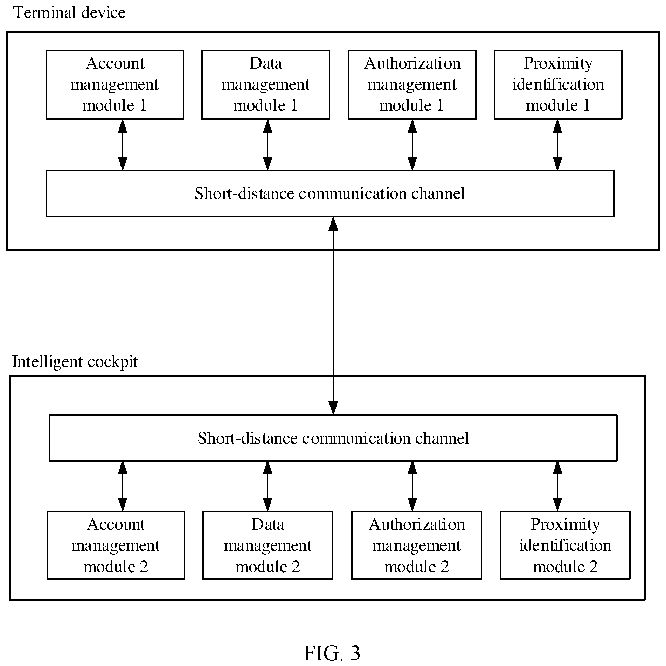

**FIG. 3** is a diagram of possible structures of a terminal device and an intelligent cockpit according to an embodiment of this application. As shown in FIG. 3, the terminal device may include an account management module 1, a data management module 1, an authorization management module 1, and a proximity identification module 1, and the intelligent cockpit may include an account management module 2, a data management module 2, an authorization management module 2, and a proximity identification module 2.

The account management module 1 is configured to generate and manage a temporary account of a user. The account management module 2 is configured to verify an account that requests login. For example, the account management module 1 may communicate with the account management module 2. For example, the account management module 1 may send a temporary account to the account management module 2.

The data management module 1 is configured to manage vehicle setting information corresponding to the temporary account, and the data management module 1 may send the vehicle setting information corresponding to the temporary account to the data management module 2. The data management module 2 may perform corresponding setting based on the vehicle setting information corresponding to the temporary account.

The authorization management module 1 is configured to request to authorize a user of the terminal device to log in to the intelligent cockpit system by using the temporary account. The authorization management module 2 is configured to determine whether to approve the authorization.

The proximity identification module 1 and the proximity identification module 2 are configured to implement short-distance communication between the terminal device and the intelligent cockpit.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the communication system and the emergence of new service scenarios, the technical solutions provided in embodiments of this application are also applicable to similar technical problems.

The following describes in detail, with reference to specific embodiments, the method provided in embodiments of this application. In specific embodiments, an example in which the method provided in embodiments of this application is applied to the network architecture shown in FIG. 2 is used. In addition, the method may be performed by two apparatuses. The two apparatuses are, for example, a first apparatus and a second apparatus. The first apparatus may be a terminal device or an apparatus that can support a terminal device to implement a function required by the method, or certainly may be another apparatus, for example, a chip or a chip system. The second apparatus may be an intelligent cockpit or an apparatus that can support an intelligent cockpit to implement a function required by the method, or certainly may be another apparatus, for example, a chip or a chip system. For ease of description, the following uses an example in which the method is performed by the terminal device and the intelligent cockpit, that is, the first apparatus is the terminal device and the second apparatus is the intelligent cockpit.

### Embodiment 1

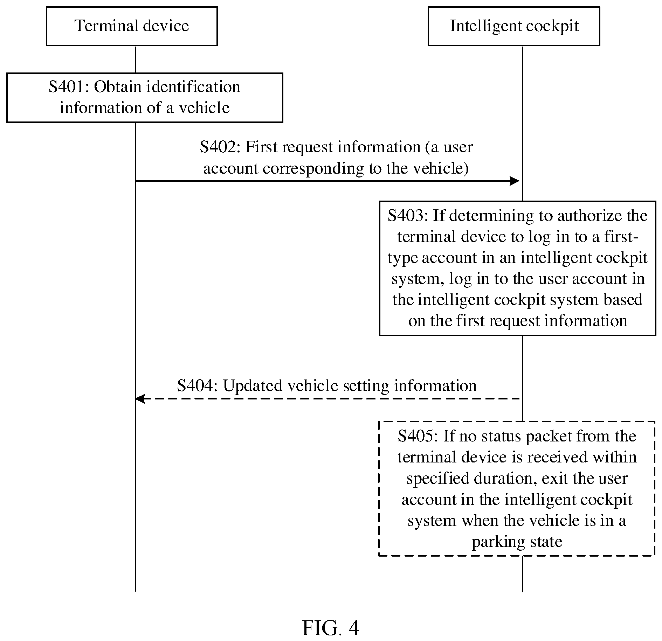

**FIG. 4** is a schematic flowchart corresponding to a method according to this embodiment of this application. As shown in FIG. 4, the method may include the following steps.

**S401:** A terminal device obtains identification information of a vehicle.

For example, the identification information of the vehicle may include one or more of brand information of the vehicle, type information of the vehicle (for example, a car or an SUV), and series information of the vehicle.

The terminal device may obtain the identification information of the vehicle in a plurality of manners. For example, the intelligent cockpit may send a short-distance broadcast message based on a short-distance communication technology (such as Wi-Fi or Bluetooth), where the short-distance broadcast message includes the identification information of the vehicle. After receiving the short-distance broadcast message, the terminal device may obtain the identification information of the vehicle from the short-distance broadcast message.

In this embodiment of this application, there may be a plurality of scenarios in which the intelligent cockpit sends the short-distance broadcast message. For example, in a possible scenario, when detecting an operation of starting an intelligent cockpit system and that the vehicle is in a parking state, the intelligent cockpit may send the short-distance broadcast message. For example, the intelligent cockpit may send the short-distance broadcast message within a specified time period. Start time of the specified time period may be time at which the operation of starting the intelligent cockpit system is detected, and duration of the specified time period may be preset, for example, may be 10 seconds. This is not specifically limited. In another possible scenario, when detecting that an intelligent cockpit system is in a running state and that the vehicle is in a parking state, the intelligent cockpit may send a short-distance broadcast message.

It may be understood that the terminal device may also communicate with the intelligent cockpit based on NFC, to obtain the identification information of the vehicle. The NFC requires that the terminal device and the intelligent cockpit perform "OneHop" (that is, a user needs to perform a OneHop operation). However, in the foregoing manner (the intelligent cockpit may send the identification information of the vehicle to the terminal device through the short-distance broadcast message), the user does not need to perform an operation, thereby improving user experience.

**S402:** The terminal device sends first request information to the intelligent cockpit of the vehicle, where the first request information includes a user account corresponding to the vehicle, and the user account belongs to a first-type account. Correspondingly, the intelligent cockpit receives the first request information.

Herein, the terminal device may send the first request information to the intelligent cockpit based on the short-distance communication technology.

For example, the terminal device may determine, based on the obtained identification information of the vehicle, whether the terminal device stores the user account corresponding to the vehicle. If the terminal device stores the user account corresponding to the vehicle, the terminal device sends the first request information to the intelligent cockpit, where the first request information may include the user account corresponding to the vehicle. Optionally, the terminal device may further store historical vehicle setting information corresponding to the user account, and the first request information may further include the historical vehicle setting information corresponding to the user account.

That is, the terminal device may store a correspondence among a vehicle, a user account, and vehicle setting information. Table 1 shows an example of the correspondence stored in the terminal device.

**Table 1: Example of the correspondence among a vehicle, a user account, and vehicle setting information**

| Identification information of the vehicle | User account | Vehicle setting information |
|---|---|---|
| Vehicle 1 | User account 1 | Vehicle setting information 1 |
| Vehicle 2 | User account 2 | Vehicle setting information 2 |
| Vehicle 3 | User account 3 | Vehicle setting information 3 |

If the terminal device does not store the user account corresponding to the vehicle, the terminal device may generate a user account, establish and store a correspondence between the user account and the vehicle, and send the first request information to the intelligent cockpit, where the first request information includes the newly generated user account. That is, the first-type account in this embodiment of this application is generated by the terminal device for the vehicle.

**S403:** If determining to authorize the terminal device to log in to the first-type account on the intelligent cockpit system, the intelligent cockpit logs in to the user account on the intelligent cockpit system based on the first request information.

Herein, there may be a plurality of implementations in which the intelligent cockpit determines to authorize the terminal device to log in to the first-type account on the intelligent cockpit system. Two possible implementations are described herein.

### Implementation 1

The intelligent cockpit may determine, based on the first request information, whether to authorize the terminal device to log in to the first-type account on the intelligent cockpit system. If determining to authorize the terminal device to log in to the first-type account on the intelligent cockpit system, the intelligent cockpit logs in to the user account on the intelligent cockpit system. In this case, the first request information has two functions. One function is used to request to authorize the terminal device to log in to the first-type account on the intelligent cockpit system. The other function is used to request to log in to the user account on the intelligent cockpit system.

### Implementation 2

The terminal device may further send second request information to the intelligent cockpit, where the second request information is used to request to authorize the terminal device to log in to the first-type account on the intelligent cockpit system. Correspondingly, the intelligent cockpit determines, based on the second request information, whether to authorize the terminal device to log in to the first-type account on the intelligent cockpit system. In this case, the terminal device separately sends, to the intelligent cockpit, request information (that is, the second request information) for requesting authorization and request information (that is, the first request information) for requesting login.

There may be a plurality of implementations in which the intelligent cockpit determines, based on the first request information or the second request information, whether to authorize the terminal device to log in to the first-type account on the intelligent cockpit system. For details, refer to descriptions in Embodiment 2. In Embodiment 2, that the intelligent cockpit determines, based on the second request information, whether to authorize the terminal device to log in to the first-type account on the intelligent cockpit system is used as an example. For that the intelligent cockpit determines, based on the first request information, whether to authorize the terminal device to log in to the first-type account on the intelligent cockpit system, refer to an embodiment.

In an optional solution, before logging in to the user account on the intelligent cockpit system (or before determining to authorize the terminal device to log in to the first-type account on the intelligent cockpit system), the intelligent cockpit first determines whether the terminal device meets at least one of the following: The terminal device is located in a preset area, where the preset area includes an area in which a driver's seat is located; and a distance between the terminal device and the intelligent cockpit is less than a preset distance. There may be a plurality of implementations in which the intelligent cockpit determines whether the terminal device meets at least one of the foregoing conditions. This is not limited in embodiments of this application. If determining that the terminal device meets at least one of the foregoing conditions, the intelligent cockpit may log in to the user account on the intelligent cockpit system. Otherwise, the intelligent cockpit may not log in to the user account on the intelligent cockpit system.

For example, if the first request information further includes historical vehicle setting information corresponding to the user account, the intelligent cockpit may further perform, on the vehicle based on the historical vehicle setting information, setting corresponding to the historical vehicle setting information. For example, if the historical vehicle setting information includes seat position adjustment information and rearview mirror position adjustment information, the intelligent cockpit may adjust a seat position based on the seat position adjustment information, and adjust a rearview mirror position based on the rearview mirror position adjustment information.

Optionally, after logging in to the user account, the intelligent cockpit may send login indication information to the terminal device, where the login indication information indicates the intelligent cockpit has logged in to the user account.

Optionally, the foregoing method further includes S404 and/or S405.

**S404:** After detecting an operation of updating a vehicle setting, the intelligent cockpit sends updated vehicle setting information to the terminal device. Correspondingly, the terminal device receives the updated vehicle setting information.

That is, after the intelligent cockpit logs in to the user account on the intelligent cockpit system, the user may update the vehicle setting. If detecting the operation of updating the vehicle setting, the intelligent cockpit may send the updated vehicle setting information to the terminal device.

For example, the intelligent cockpit may further send, to the terminal device, a user account corresponding to the updated vehicle setting information. After the terminal device receives the updated vehicle setting information and the corresponding user account, if the user account has corresponding historical vehicle setting information, the terminal device may update the historical vehicle setting information based on the updated vehicle setting information (the updated vehicle setting information may cover some or all of the historical vehicle setting information). If the user account does not have corresponding historical vehicle setting information, the terminal device may directly store the updated vehicle setting information.

**S405:** If the intelligent cockpit does not receive a status packet from the terminal device within specified duration, the intelligent cockpit exits the user account on the intelligent cockpit system when the vehicle is in a parking state.

For example, after the intelligent cockpit logs in to the user account on the intelligent cockpit system, the terminal device may periodically send the status packet to the intelligent cockpit. The status packet may also be referred to as a heartbeat packet. If not receiving the status packet from the terminal device within the specified duration, the intelligent cockpit may determine that a connection between the terminal device and the intelligent state is abnormal (that is, the terminal device is in an offline state). In this case, the intelligent cockpit may further detect whether the vehicle is in the parking state. If the vehicle is in the parking state, the intelligent cockpit exits the user account on the intelligent cockpit system. If detecting that the vehicle is in a driving status, the intelligent cockpit may temporarily not exit the user account, and continuously detect the status packet of the terminal device. If subsequently detecting the status packet of the terminal device, the intelligent cockpit may determine that the connection between the terminal device and the intelligent state is normal. If always not detecting the status packet of the terminal device, the intelligent cockpit may exit the user account on the intelligent cockpit system when detecting the parking state.

In addition, after detecting an operation of shutting down the intelligent cockpit system, the intelligent cockpit may exit the user account on the intelligent cockpit system.

In this embodiment of this application, after the intelligent cockpit exits the user account on the intelligent cockpit system, the vehicle setting corresponding to the user account may be maintained.

According to the foregoing method, a temporary account can be logged in on the intelligent cockpit system through communication between the terminal device and the intelligent cockpit. Because the temporary account does not need to be verified by a cloud server, a login failure problem in an environment with no reception or with poor reception is avoided, and user experience is improved. In addition, in the foregoing method, a user may not need to perform an operation, so that seamless login or user account switching on the intelligent cockpit system can be implemented.

For example, when a driver is replaced between family members, the foregoing method may be used to implement seamless user account switching. For example, when a family member 1 needs to drive a vehicle, a terminal device (for example, a smartwatch 1) of the family member 1 can communicate with an intelligent cockpit, and send a temporary account of the family member 1 to the intelligent cockpit, so that the intelligent cockpit logs in to the temporary account of the family member 1 in an intelligent cockpit system, and executes personalized settings corresponding to the family member 1. Subsequently, because the family member 1 wants to rest, the family member 1 stops the vehicle, and sits in a passenger seat or a rear seat, and a family member 2 sits in a driver's seat and prepares to drive the vehicle. In this case, when detecting that the intelligent cockpit system is in a running state and that the vehicle is in a parking state, the intelligent cockpit may send a short-distance broadcast message. After receiving the short-distance broadcast message, a terminal device (for example, a smartwatch 2) of the family member 2 may communicate with the intelligent cockpit, and send a temporary account of the family member 2 to the intelligent cockpit, so that the intelligent cockpit can switch the temporary account, which has been logged in to the intelligent cockpit system, of the family member 1 to the temporary account of the family member 2, and executes personalized settings corresponding to the family member 2.

### Embodiment 2

Based on the descriptions of Embodiment 1, the following describes a possible implementation procedure by using the implementation 2 in Embodiment 1 as an example.

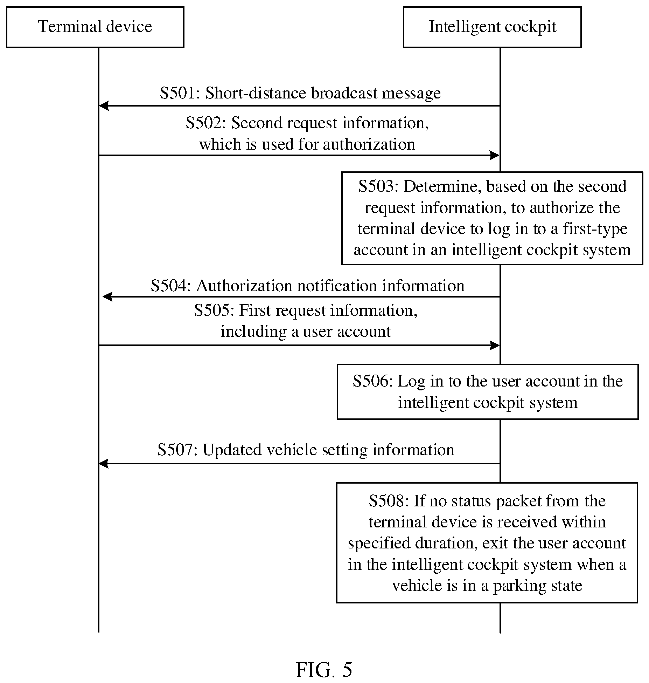

**FIG. 5** is a schematic flowchart corresponding to a method according to this embodiment of this application. As shown in FIG. 5, the method may include the following steps.

**S501:** An intelligent cockpit of a vehicle sends a short-distance broadcast message, where the short-distance broadcast message includes identification information of the vehicle.

**S502:** After receiving the short-distance broadcast message, a terminal device sends second request information to the intelligent cockpit, where the second request information is used to request to authorize the terminal device to log in to a first-type account in an intelligent cockpit system.

Herein, when a distance between the terminal device and the intelligent cockpit meets a short-distance communication requirement, the terminal device can receive the short-distance broadcast message from the intelligent cockpit, and then send the second request information to the intelligent cockpit based on the short-distance broadcast message. That is, the short-distance broadcast message may be used to trigger the terminal device that receives the short-distance broadcast message to send the second request message.

For example, the second request information may include identification information of the terminal device. For example, the identification information of the terminal device may include one or more of type information (for example, a smartwatch or a smartphone) of the terminal device, brand information (for example, Huawei) of the terminal device, and series information of the terminal device. For example, the identification information of the terminal device is Huawei WATCH GT3. It may be understood that the second request information may further include other possible information, for example, may further include type information of the first-type account. This is not specifically limited.

**S503:** The intelligent cockpit determines, based on the second request information, to authorize the terminal device to log in to the first-type account on the intelligent cockpit system.

Herein, there may be a plurality of manners in which the intelligent cockpit determines, based on the second request information, to authorize the terminal device to log in to the first-type account on the intelligent cockpit system. Three possible manners are described herein: a manner 1, a manner 2, and a manner 3.

Manner 1: The intelligent cockpit may send prompt information based on the second request information, where the prompt information is used to prompt a user to determine whether to authorize the terminal device to log in to the first-type account on the intelligent cockpit system. After detecting an authorization operation of the user, the intelligent cockpit may determine to authorize the terminal device to log in to the first-type account on the intelligent cockpit system. The intelligent cockpit may send the prompt information in a plurality of implementations. For example, the intelligent cockpit may display, on a display of the intelligent cockpit, identification information (for example, Huawei WATCH GT3) of the terminal device and a button that indicates whether to authorize the terminal device. After detecting that the user taps the authorization button (that is, the authorization operation of the user), the intelligent cockpit may determine to authorize the terminal device to log in to the first-type account on the intelligent cockpit system.

Manner 2: The second request information includes facial image information. After receiving the second request information, the intelligent cockpit may determine, based on the facial image information in the second request information, whether to authorize the terminal device to log in to the first-type account on the intelligent cockpit system. For example, the intelligent cockpit may compare the facial image information in the second request information with facial image information prestored in the intelligent cockpit. If comparison results are consistent, the intelligent cockpit can determine to authorize the terminal device to log in to the first-type account on the intelligent cockpit system. In this case, the user can record the facial image information in the intelligent cockpit in advance. For another example, the intelligent cockpit may compare the facial image information in the second request information with detected facial image information of a driver. If comparison results are consistent, the intelligent cockpit can determine to authorize the terminal device to log in to the first-type account on the intelligent cockpit system.

For example, the user of the terminal device can record the facial image information in the terminal device in advance, so that the terminal device can carry the facial image information when sending the second request information.

Manner 3: The intelligent cockpit may store a trustlist. The trustlist includes identification information of at least one device. After receiving the second request information, if determining that the trustlist includes identification information of the terminal device, the intelligent cockpit may determine to authorize the terminal device to log in to the first-type account on the intelligent cockpit system. The trustlist may be preset by a user. This is not specifically limited.

In addition, in an optional solution, the intelligent cockpit may first determine whether the terminal device meets at least one of the following: The terminal device is located in a preset area, where the preset area includes an area in which a driver's seat is located; and a distance between the terminal device and the intelligent cockpit is less than a preset distance. If determining that the terminal device meets at least one of the foregoing conditions, the intelligent cockpit may determine, in the foregoing manner, whether to authorize the terminal device to log in to the first-type account on the intelligent cockpit system. Otherwise, the intelligent cockpit may directly determine not to authorize the terminal device to log in to the first-type account on the intelligent cockpit system.

For example, a plurality of terminal devices (for example, a terminal device 1 and a terminal device 2) receive the short-distance broadcast message of the intelligent cockpit, and send the second request information to the intelligent cockpit. In this case, the intelligent cockpit may determine whether the terminal device 1 and the terminal device 2 are located in the preset area, and whether distances between the terminal device 1 and the intelligent cockpit, and between the terminal device 2 and the intelligent cockpit are less than the preset distance. If the terminal device 1 is located in the preset area, the distance between the terminal device 1 and the intelligent cockpit is less than the preset distance, the terminal device 2 is not in the preset area, and the distance between the terminal device 2 and the intelligent cockpit is greater than the preset distance, the intelligent cockpit may determine, based on second request information of the terminal device 1, whether to authorize the terminal device 1 to log in to the first-type account on the intelligent cockpit system, and ignore second request information of the terminal device 2.

**S504:** The intelligent cockpit sends authorization notification information to the terminal device, where the authorization notification information indicates the intelligent cockpit to authorize the terminal device to log in to the first-type account on the intelligent cockpit system. Correspondingly, the terminal device determines, based on the authorization notification information, that the intelligent cockpit authorizes the terminal device to log in to the first-type account on the intelligent cockpit system.

**S505:** The terminal device sends first request information to the intelligent cockpit, where the first request information includes a user account corresponding to the vehicle, and the user account belongs to the first-type account. Correspondingly, the intelligent cockpit receives the first request information.

For example, if determining that the intelligent cockpit authorizes the terminal device to log in to the first-type account on the intelligent cockpit system (for example, the authorization notification information is received), the terminal device may send the first request information to the intelligent cockpit based on the identification information of the vehicle. Otherwise (for example, the authorization notification information is not received), the terminal device may not send the first request information to the intelligent cockpit.

**S506:** The intelligent cockpit logs in to the user account on the intelligent cockpit system based on the first request information.

For example, if the first request information further includes historical vehicle setting information corresponding to the user account, the intelligent cockpit may further perform, on the vehicle based on the historical vehicle setting information, setting corresponding to the historical vehicle setting information. For specific implementation, refer to S403 in Embodiment 1.

Optionally, the foregoing method further includes S507 and/or S508.

**S507:** After detecting an operation of updating a vehicle setting, the intelligent cockpit sends updated vehicle setting information to the terminal device. Correspondingly, the terminal device receives the updated vehicle setting information.

**S508:** If the intelligent cockpit does not receive a status packet from the terminal device within specified duration, the intelligent cockpit exits the user account on the intelligent cockpit system when the vehicle is in the parking state.

For S507 and S508, refer to S404 and S405 in Embodiment 1. Details are not described again.

In Embodiment 2, the terminal device may communicate with the intelligent cockpit based on a short-distance communication technology. An example in which the terminal device may communicate with the intelligent cockpit based on the near distance communication technology is used, and in a type of possible implementation, a new AD_Type field may be defined in an AdvData field in a Bluetooth packet. Table 2 describes an example of the newly defined AD_Type field in this embodiment of this application.

**Table 2: Example of the AD_Type field**

| AD_Type field | PRI_Type field (that is, a subfield of the AD_Type field) | Load |
|---|---|---|
| 0xFF | 0x01 (short-distance broadcast message) | Carrying identification information of a vehicle |
| 0xFF | 0x02 (requesting for authorization) | Carrying identification information (for example, second request information) of a terminal device |
| 0xFF | 0x03 (authorization feedback) | Carrying an authorization result (for example, authorization notification information) |
| 0xFF | 0x04 (an account and/or vehicle setting information) | Carrying a user account and/or the vehicle setting information (for example, first request information) |
| 0xFF | 0x05 (status packet) | Carrying identification information or address information of the terminal device |

It may be understood that the foregoing uses the Bluetooth communication technology as an example. When the terminal device and the intelligent cockpit use another short-distance communication technology, a packet related to the another communication technology may be modified. For details, refer to Table 2. Details are not described again.

### Embodiment 3

Based on the descriptions of Embodiment 2, the following describes a possible implementation procedure with reference to the structure shown in FIG. 3.

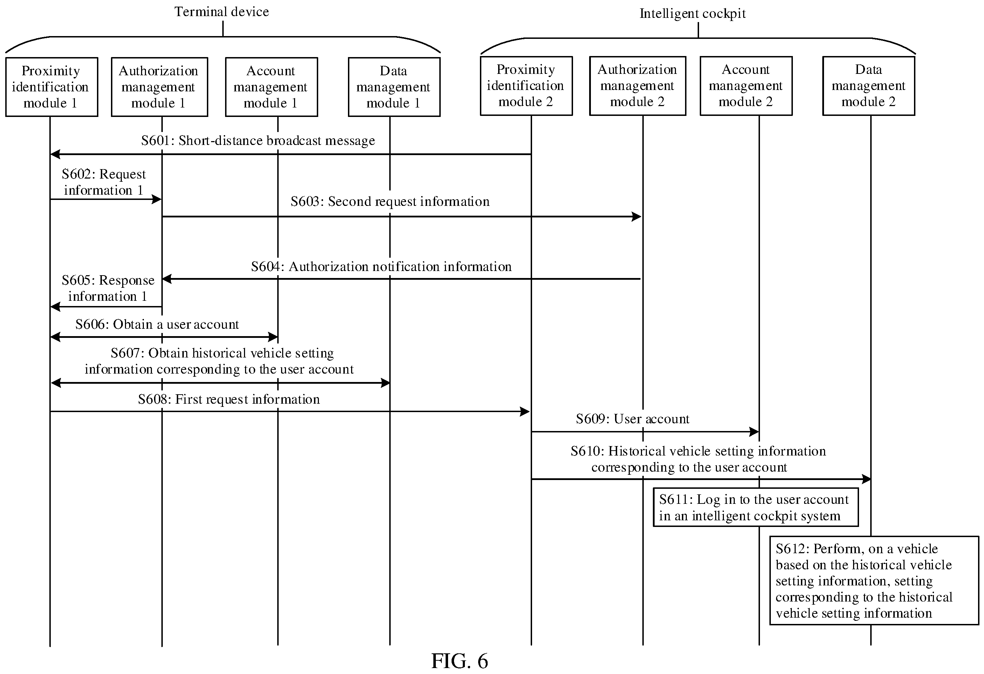

**FIG. 6** is a schematic flowchart corresponding to a method according to this embodiment of this application. As shown in FIG. 6, the method may include the following steps.

S601: A proximity identification module 2 sends a short-distance broadcast message.

S602: After receiving the short-distance broadcast message, a proximity identification module 1 sends request information 1 to an authorization management module 1, where the request information 1 is used to request the authorization management module 1 to request an intelligent cockpit to authorize a terminal device to log in to a first-type account in an intelligent cockpit system.

S603: After receiving the request information 1, the authorization management module 1 sends second request information to an authorization management module 2, where the second request information requests to authorize the terminal device to log in to the first-type account on the intelligent cockpit system.

S604: After receiving the second request information, if determining to authorize the terminal device to log in to the first-type account on the intelligent cockpit system, the authorization management module 2 sends authorization notification information to the authorization management module 1.

S605: After receiving the authorization notification information, the authorization management module 1 sends response information 1 to the proximity identification module 1, where the response information 1 indicates the intelligent cockpit to authorize the terminal device to log in to the first-type account on the intelligent cockpit system.

S606: The proximity identification module 1 obtains a user account from an account management module 1.

S607: The proximity identification module 1 obtains, from a data management module 1, historical vehicle setting information corresponding to the user account.

S608: The proximity identification module 1 sends first request information to the proximity identification module 2, where the first request information includes the user account and the historical vehicle setting information corresponding to the user account.

It may be understood that if the data management module 1 determines that the terminal device does not store the historical vehicle setting information corresponding to the user account, the first request information may alternatively not include the historical vehicle setting information corresponding to the user account.

S609: After receiving the first request information, the proximity identification module 2 sends the user account to an account management module 2.

S610: After receiving the first request information, the proximity identification module 2 sends, to a data management module 2, the historical vehicle setting information corresponding to the user account.

S611: After receiving the user account, the account management module 2 logs in to the user account on the intelligent cockpit system.

S612: The data management module 2 receives the historical vehicle setting information corresponding to the user account, and performs, on a vehicle based on the historical vehicle setting information, setting corresponding to the historical vehicle setting information.

For Embodiment 1 to Embodiment 3, it may be understood that:
(1) The foregoing focuses on differences between different embodiments, that is, Embodiment 1 to Embodiment 3, and content other than the differences may be mutually referenced in Embodiment 1 to Embodiment 3. In addition, in a same embodiment, different implementations or different examples may also be mutually referenced.
(2) Step numbers in the flowcharts described in Embodiment 1 to Embodiment 3 are merely an example of an execution procedure, and do not constitute a limitation on an execution sequence of the steps. In embodiments of this application, there is no strict execution sequence between steps that do not have a time sequence dependency relationship with each other. Not all the steps shown in the flowcharts are mandatory steps. Some steps may be deleted from the flowcharts based on an actual requirement, or another possible step may be added to the flowcharts based on an actual requirement.

The foregoing mainly describes the solutions provided in embodiments of this application from a perspective of interaction between the terminal device and the intelligent cockpit. It may be understood that, to implement the foregoing functions, the terminal device and the intelligent cockpit may include a corresponding hardware structure and/or software module for implementing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional units of the terminal device and the intelligent cockpit may be obtained through division based on the foregoing method example. For example, each functional unit may be obtained through division based on each corresponding function, or two or more functions may be integrated into one unit. The integrated unit may be implemented in a form of hardware, or may be implemented in a form of a software functional unit.

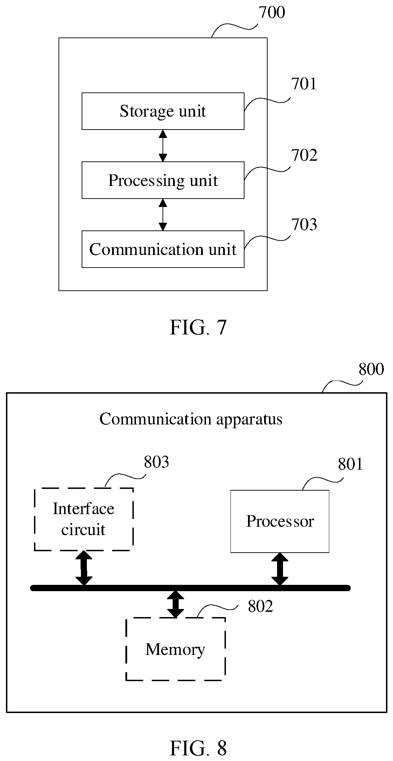

FIG. 7 is a possible example block diagram of an apparatus according to an embodiment of this application. As shown in FIG. 7, the apparatus 700 may include a processing unit 702 and a communication unit 703. The processing unit 702 is configured to control and manage an action of the apparatus 700. The communication unit 703 is configured to support communication between the apparatus 700 and another device. Optionally, the communication unit 703 is also referred to as a transceiver unit, and may include a receiving unit and/or a sending unit, respectively configured to perform a receiving operation and a sending operation. The apparatus 700 may further include a storage unit 701 that is configured to store program code and/or data of the apparatus 700.

The apparatus 700 may be the intelligent cockpit in the foregoing embodiments, or may be a component (for example, a circuit or a chip) disposed in the intelligent cockpit. The processing unit 702 may support the apparatus 700 to perform actions of the intelligent cockpit in the foregoing method examples. Alternatively, the processing unit 702 mainly performs internal actions of the intelligent cockpit in the method examples, and the communication unit 703 may support communication between the apparatus 700 and another device.

For example, in an embodiment, the communication unit 703 is configured to receive first request information from a terminal device, where the first request information includes a user account corresponding to a vehicle, and the user account belongs to a first-type account. The processing unit 702 is configured to: if determining to authorize the terminal device to log in to the first-type account in an intelligent cockpit system, log in to the user account on the intelligent cockpit system based on the first request information.

The apparatus 700 may be the terminal device in the foregoing embodiments, or may be a component (for example, a circuit or a chip) disposed in the terminal device. The processing unit 702 may support the apparatus 700 to perform actions of the terminal device in the foregoing method examples. Alternatively, the processing unit 702 mainly performs internal actions of the terminal device in the method examples, and the communication unit 703 may support communication between the apparatus 700 and another device.

In an embodiment, the communication unit 703 is configured to: obtain identification information of a vehicle; send first request information to an intelligent cockpit of the vehicle, where the first request information includes a user account corresponding to the vehicle, the first request information is used to request to log in to the user account on the intelligent cockpit system of the intelligent cockpit, and the user account belongs to a first-type account.

It should be understood that division of units in the foregoing apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element, or may be implemented in a form in which the processing element invokes software.

In an example, a unit in any one of the foregoing apparatuses may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

FIG. 8 is a diagram of a structure of a communication apparatus according to an embodiment of this application. The communication apparatus is configured to implement operations of the intelligent cockpit in the foregoing embodiments.

As shown in FIG. 8, the communication apparatus 800 may include a processor 801, a memory 802, and an interface circuit 803. The processor 801 may be configured to process a communication protocol and communication data, and control the communication apparatus 800. The memory 802 may be configured to store a program and data, and the processor 801 may perform, based on the program, the method performed by the AP in embodiments of this application. The interface circuit 803 may be used by the communication apparatus 800 to communicate with another device, the communication may be wired communication or wireless communication, and the interface circuit may alternatively be replaced with a transceiver.

Alternatively, the memory 802 may be externally connected to the communication apparatus 800. In this case, the communication apparatus 800 may include the interface circuit 803 and the processor 801. Alternatively, the interface circuit 803 may be externally connected to the communication apparatus 800. In this case, the communication apparatus 800 may include the memory 802 and the processor 801. When both the interface circuit 803 and the memory 802 are externally connected to the communication apparatus 800, the communication apparatus 800 may include the processor 801.

The communication apparatus shown in FIG. 8 can implement processes related to the intelligent cockpit in the foregoing method embodiments. Operations and/or functions of modules in the communication apparatus shown in FIG. 8 are separately used to implement corresponding procedures in the foregoing method embodiments. For details, refer to the descriptions in the foregoing method embodiments. To avoid repetition, detailed descriptions are properly omitted herein.

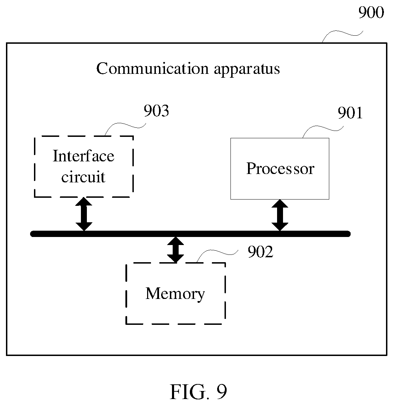

FIG. 9 is a diagram of a structure of a communication apparatus according to an embodiment of this application. The communication apparatus is configured to implement operations of the terminal device in the foregoing embodiments.

As shown in FIG. 9, the communication apparatus 900 may include a processor 901, a memory 902, and an interface circuit 903. The processor 901 may be configured to process a communication protocol and communication data, and control the communication apparatus 900. The memory 902 may be configured to store a program and data, and the processor 901 may perform, based on the program, the method performed by the AP in embodiments of this application. The interface circuit 903 may be used by the communication apparatus 900 to communicate with another device, the communication may be wired communication or wireless communication, and the interface circuit may alternatively be replaced with a transceiver.

Alternatively, the memory 902 may be externally connected to the communication apparatus 900. In this case, the communication apparatus 900 may include the interface circuit 903 and the processor 901. Alternatively, the interface circuit 903 may be externally connected to the communication apparatus 900. In this case, the communication apparatus 900 may include the memory 902 and the processor 901. When both the interface circuit 903 and the memory 902 are externally connected to the communication apparatus 900, the communication apparatus 900 may include the processor 901.

The communication apparatus shown in FIG. 9 can implement processes related to the terminal device in the foregoing method embodiments. Operations and/or functions of modules in the communication apparatus shown in FIG. 9 are separately used to implement corresponding procedures in the foregoing method embodiments. For details, refer to the descriptions in the foregoing method embodiments. To avoid repetition, detailed descriptions are properly omitted herein.

Terms "system" and "network" may be used interchangeably in embodiments of this application. "At least one" means one or more, and "a plurality of" means two or more. A term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A method for logging in to an intelligent cockpit system, wherein the method is applied to an intelligent cockpit of a vehicle, the intelligent cockpit system is installed in the intelligent cockpit, and the method comprises:
receiving first request information from a terminal device, wherein the first request information comprises a user account corresponding to the vehicle, and the user account belongs to a first-type account; and
if it is determined to authorize the terminal device to log in to the first-type account on the intelligent cockpit system, logging in to the user account on the intelligent cockpit system based on the first request information.

2. The method according to claim 1, wherein the first request information further comprises historical vehicle setting information corresponding to the user account; and
the method further comprises:
performing, on the vehicle based on the historical vehicle setting information, setting corresponding to the historical vehicle setting information.

3. The method according to claim 1 or 2, wherein the method further comprises:
sending updated vehicle setting information to the terminal device after an operation of updating a vehicle setting is detected.

4. The method according to any one of claims 1 to 3, wherein determining to authorize the terminal device to log in to the first-type account on the intelligent cockpit system comprises:
receiving second request information from the terminal device, wherein the second request information is used to request to authorize the terminal device to log in to the first-type account on the intelligent cockpit system; and
determining, based on the second request information, to authorize the terminal device to log in to the first-type account on the intelligent cockpit system.

5. The method according to claim 4, wherein the determining, based on the second request information, to authorize the terminal device to log in to the first-type account on the intelligent cockpit system comprises:
sending prompt information based on the second request information, wherein the prompt information is used to prompt a user to determine whether to authorize the terminal device to log in to the first-type account on the intelligent cockpit system, and after an authorization operation of the user is detected, determining to authorize the terminal device to log in to the first-type account on the intelligent cockpit system; or
the second request information comprises facial image information, and if the facial image information is consistent with prestored facial image information, or the facial image information is consistent with detected facial image information of a driver, determining to authorize the terminal device to log in to the first-type account on the intelligent cockpit system.

6. The method according to claim 4 or 5, wherein the method further comprises:
sending authorization notification information to the terminal device, wherein the authorization notification information indicates the intelligent cockpit to authorize the terminal device to log in to the first-type account on the intelligent cockpit system.

7. The method according to any one of claims 1 to 6, wherein the method further comprises:
sending a short-distance broadcast message, wherein the short-distance broadcast message comprises identification information of the vehicle.

8. The method according to claim 7, wherein the sending a short-distance broadcast message comprises:
when it is determined that a preset condition is met, sending the short-distance broadcast message, wherein
determining that a preset condition is met comprises: detecting an operation of starting the intelligent cockpit system and that the vehicle is in a parking state, or detecting that the intelligent cockpit system is in a running state and that the vehicle is in a parking state.

9. The method according to any one of claims 1 to 8, wherein before the logging in to the user account on the intelligent cockpit system, the method further comprises:
determining that the terminal device meets at least one of the following:
the terminal device is located in a preset area, and the preset area comprises an area in which a driver's seat is located; and
a distance between the terminal device and the intelligent cockpit is less than a preset distance.

10. The method according to any one of claims 1 to 9, wherein the method further comprises:
if no status packet from the terminal device is received within specified duration, exiting the user account when the vehicle is in the parking state.

11. A method for logging in to an intelligent cockpit system, wherein the method is applied to a terminal device, and the method comprises:
obtaining identification information of a vehicle; and
sending first request information to an intelligent cockpit of the vehicle, wherein the first request information comprises a user account corresponding to the vehicle, the first request information is used to request to log in to the user account on the intelligent cockpit system of the intelligent cockpit, and the user account belongs to a first-type account.

12. The method according to claim **11,** wherein the first request information further comprises historical vehicle setting information corresponding to the user account, and the historical vehicle setting information is used to perform, on the vehicle, setting corresponding to the historical vehicle setting information.

13. The method according to claim 11 or 12, wherein the method further comprises:
receiving updated vehicle setting information from the intelligent cockpit, wherein the updated vehicle setting information is sent after an operation of updating a vehicle setting is detected.

14. The method according to any one of claims 11 to 13, wherein the method further comprises:
sending second request information to the intelligent cockpit, wherein the second request information is used to request to authorize the terminal device to log in to the first-type account on the intelligent cockpit system.

15. The method according to claim 14, wherein the second request information comprises facial image information, and the facial image information is used to determine whether to authorize the terminal device to log in to the first-type account on the intelligent cockpit system.

16. The method according to claim 14 or 15, wherein the method further comprises:
receiving authorization notification information from the intelligent cockpit, wherein the authorization notification information indicates the intelligent cockpit to authorize the terminal device to log in to the first-type account on the intelligent cockpit system.

17. The method according to any one of claims 11 to 16, wherein the obtaining identification information of a vehicle comprises:
receiving a short-distance broadcast message from the intelligent cockpit, wherein the short-distance broadcast message comprises the identification information of the vehicle.

18. An apparatus for logging in to an intelligent cockpit system, comprising a processor, wherein the processor is coupled to a memory, the memory stores a computer program, and the processor is configured to invoke the computer program in the memory, to enable the apparatus to perform the method according to any one of claims 1 to 10 or the method according to any one of claims 11 to 17.

19. A computer-readable storage medium, wherein the storage medium stores a computer program or instructions, and when the computer program or the instructions are executed by a computer, the method according to any one of claims 1 to 10 or the method according to any one of claims 11 to 17 is implemented.

20. A computer program product, wherein when a computer reads and executes the computer program product, the computer is enabled to perform the method according to any one of claims 1 to 10 or the method according to any one of claims 11 to 17.
